# EUROPEAN PATENT SPECIFICATION

(11) **EP 4 559 615 B1**
(45) Date of publication and mention of the grant of the patent: **29.10.2025**
(21) Application number: 24150154.3
(22) Date of filing: 03.01.2024
(51) Int. Cl.: B23K 26/16, B23K 26/38, B23K 26/70

(54) **APPARATUS FOR AUTOMATICALLY CLEANING PATTERN JIG AFTER LASER NOTCHING**
VORRICHTUNG ZUR AUTOMATISCHEN REINIGUNG EINER MUSTERSCHABLONE NACH LASEREINKERBUNG
APPAREIL DE NETTOYAGE AUTOMATIQUE DE GABARIT DE MOTIF APRÈS L'ENCOCHAGE LASER

(30) Priority: 24.11.2023 KR 20230165296
(43) Date of publication of application: 28.05.2025
(73) Proprietor: Lee, Kye-seol, Seoul (KR)
(72) Inventor: Lee, Kye-seol, Seoul (KR)
(74) Representative: Wunderlich & Heim Patentanwälte PartG mbB

(56) References cited:
- KR-A- 20230 067 289

## Description

### BACKGROUND OF THE INVENTION

### Field of the Invention

The present invention relates to an apparatus for automatically cleaning a pattern jig after laser notching, and more particularly to an apparatus for automatically cleaning a pattern jig after laser notching configured such that, as a means configured to remove contaminants, such as fumes and particles, generated on a support portion of the pattern jig by high temperatures when cutting a non-coated portion of each of aluminum foil having positive electrode coating thereon and copper foil having negative electrode coating thereon using a laser in the state in which the non-coated portion is supported by the pattern jig, two pattern jigs are provided at one quadrangular rotating body, the rotating body is alternately rotated 90 degrees upward or downward, and brushes are moved leftward and rightward above or below to periodically perform cleaning, whereby it is possible to continuously cut the non-coated portion.

### Description of the Related Art

As the price of energy sources increases due to the depletion of fossil fuels and environmental pollution is becoming a growing concern, the demand for a secondary battery as an eco-friendly alternative energy source is becoming an indispensable factor for future life.

An electrode used to form an electrode assembly is manufactured in the state in which an active material is applied to a part of the electrode and no active material is applied to the remaining part of the electrode such that an electrode body is exposed.

The exposed part, through which the electrode body is exposed, is processed to serve as an electrode terminal for connecting a positive electrode and a negative electrode to the outside when forming the electrode assembly, and in order to enable such processing, the electrode is formed by applying an active material to a thin conductor constituting the electrode body, and is indistinguishable after processing.

In general, a notching apparatus is an apparatus that cuts a part of the exposed part of the electrode and a part of a coated portion having an active material applied thereto to form a terminal, and a part of the exposed part is cut by punching or using a laser to form the terminal.

That is, a notching process is a process that cuts off the remaining part of a non-coated portion of a cut electrode that has undergone a slitting process, which is a part to which no positive electrode/negative electrode active material is applied, excluding the part thereof to which a tab will be attached, and the notching process is characterized in that a material is cut from an edge of thereof into a desired shape and the contour of the shape does not form a closed curve.

Conventionally, a notching apparatus using punching is mainly used; however, in recent years, the use of a notching apparatus using a laser has been increasing, since damage to an electrode is less than punching and efficient production is possible.

Conventionally, when cutting a non-coated portion using a laser, as described above, i**.**e., when positive electrode coating is performed on aluminum foil, negative electrode coating is performed on copper foil, and a non-coated portion, which is a part that is not coated, is cut, the non-coated portion is cut using a laser in the state in which the non-coated portion is supported by a pattern jig. At this time, fumes and particles are adhered to a support portion of the pattern jig due to high heat of the laser, whereby the pattern jig is contaminated, and therefore it is not possible to continuously cut the non-coated portion.
KR-A- 2023/0067289 shows an apparatus for automatically cleaning a pattern jig after laser notching, the apparatus comprising: a first pattern jig and a second pattern jig, on each of which a non-coated portion is cut by a laser, installed respectively at an upper surface and one side surface of a quadrangular rotating body; a motor configured to rotate the rotating body within a range of 90 degrees; a first upper brush fixing plate having a first brush configured to clean the first pattern jig when the first pattern jig is located above; a first brush unit configured to move the first upper brush fixing plate leftward and rightward.

### [Prior Art Documents]

### [Patent Documents]

Korean Patent Application No. 10-2013-0147928
Korean Patent Application No. 10-2020-0094704
Korean Patent Application No. 10-2021-0036919

### SUMMARY OF THE INVENTION

The present invention has been made in view of the above conventional problems, and it is an object of the present invention to provide an apparatus for automatically cleaning a pattern jig after laser notching configured such that, when a non-coated portion generated when positive electrode coating is performed on aluminum foil and negative electrode coating is performed on copper foil is cut using a laser in the state in which the non-coated portion is supported by a pattern jig, fumes and particles generated on a support portion of the pattern jig are removed, whereby it is possible to continuously cut the non-coated portion, and configured such that, when a first pattern jig, which is one of two pattern jigs (first and second pattern jigs) installed rotatably in a right angle direction, is rotated 90 degrees upward, a first brush is moved leftward and rightward to clean the first pattern jig and at the same time a second pattern jig, which has already been cleaned, is used, and when the second pattern jig is rotated 90 degrees downward, a second brush is moved leftward and rightward to clean the second pattern jig and at the same time the first pattern jig, which has already been cleaned, is used.

It is another object of the present invention to provide an apparatus for automatically cleaning a pattern jig after laser notching configured such that cleaning of the pattern jig by leftward and rightward movement of the brush is automatically performed at predetermined intervals to alternately remove contaminants generated on the support portions of the first and second pattern jigs, and the removed contaminants are discharged to the outside by vacuum suction, whereby the pattern jigs are cleaned.

In accordance with the present invention, the above and other objects can be accomplished by the provision of an apparatus for automatically cleaning a pattern jig after laser notching, the apparatus including a first pattern jig and a second pattern jig, through each of which a non-coated portion is cut by a laser, installed respectively at an upper surface and one side surface of a rectangular rotating body, a motor configured to rotate the rotating body within a range of 90 degrees, a first upper brush fixing plate and a first lower brush fixing plate having a first brush configured to clean the first pattern jig when the first pattern jig is located above, a first brush unit configured to move the first upper brush fixing plate and the first lower brush fixing plate leftward and rightward, a second upper brush fixing plate and a second lower brush fixing plate having a second brush configured to clean the second pattern jig when the second pattern jig is located below, a second brush unit configured to move the second upper brush fixing plate and the second lower brush fixing plate leftward and rightward, and a pattern jig unit configured to move the first pattern jig and the second pattern jig leftward and rightward.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view showing a pattern jig unit including an overall brush of the present invention;
FIG. 2 is a perspective view of the brush and the pattern jig unit when viewed in a direction indicated by an arrow of FIG. 1;
FIG. 3 is a perspective view showing the operation of a first brush cleaning a first pattern jig when the first pattern jig is located above by upward 90-degree rotation of the present invention; and
FIG. 4 is a perspective view showing the operation of a second brush cleaning a second pattern jig when the second pattern jig is located below by downward 90-degree rotation of the present invention.

### DETAILED DESCRIPTION OF THE INVENTION

Hereinafter, an embodiment of the present invention will be described in detail with reference to the accompanying drawings.

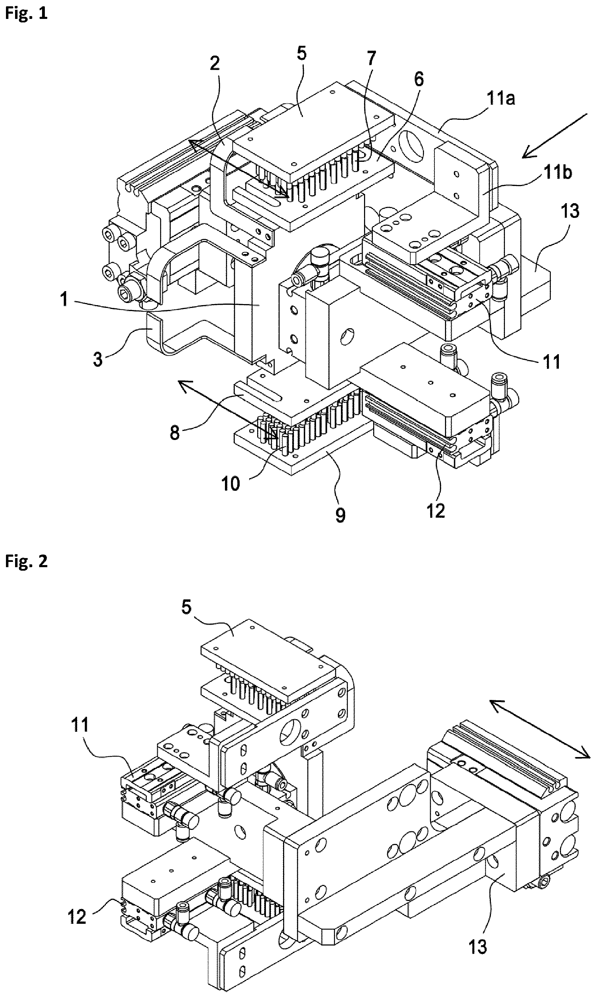

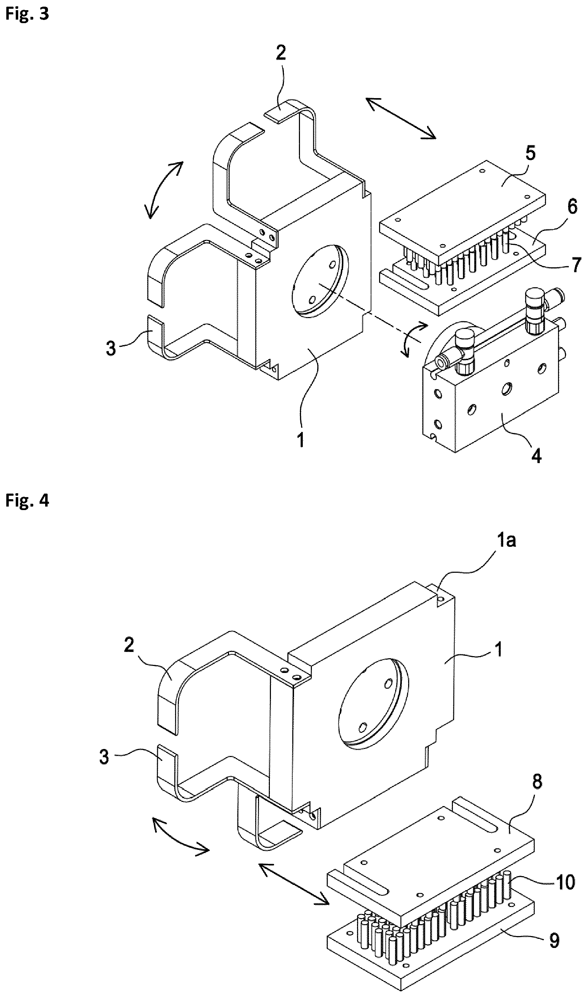

FIG. 1 is a perspective view showing a pattern jig unit including an overall brush of the present invention, FIG. 2 is a perspective view of the brush and the pattern jig unit when viewed in a direction indicated by an arrow of FIG. 1, FIG. 3 is a perspective view showing the operation of a first brush cleaning a first pattern jig when the first pattern jig is located above by upward 90-degree rotation of the present invention, and FIG. 4 is a perspective view showing the operation of a second brush cleaning a second pattern jig when the second pattern jig is located below by downward 90-degree rotation of the present invention.

As shown in FIGs. 1 to 4, the present invention includes a first pattern jig 2 and a second pattern jig 3 installed respectively at an upper surface and one side surface of a quadrangular rotating body 1, a motor 4 configured to rotate the rotating body 1 within a range of 90 degrees, a first upper brush fixing plate 5 and a first lower brush fixing plate 6 having a first brush 7 configured to clean the first pattern jig 2 when the first pattern jig 2 is located above, a first brush unit 11 configured to move the first upper brush fixing plate 5 and the first lower brush fixing plate 6 leftward and rightward, a second upper brush fixing plate 8 and a second lower brush fixing plate 9 having a second brush 10 configured to clean the second pattern jig 3 when the second pattern jig 3 is located below, a second brush unit 12 configured to move the second upper brush fixing plate 8 and the second lower brush fixing plate 9 leftward and rightward, and a pattern jig unit 13 configured to move the first pattern jig 2 and the second pattern jig 3 leftward and rightward.

The first pattern jig 2 and the second pattern jig 3 have the same structure, and are fixed to corner parts 1a of the rotating body 1 so as not to protrude therefrom.

A rotary cylinder may be used instead of the motor 4.

The operation of the present invention configured as described above will now be described.

In a process of removing particles from the laser pattern jig of the present invention, first, the first pattern jig 2 is located 90 degrees upward in the state in which the second pattern jig 3 is in use, as shown in FIG. 3.

In the state in which the first pattern jig 2 is located above, therefore, the entire unit is moved leftward and rightward through the first brush unit 11, whereby particles are removed from the first pattern jig 2 through the first brush 7. At this time, interference is prevented due to the movement of the entire unit.

The first brush 7 is provided at a lower surface of the first upper brush fixing plate 5 and an upper surface of the first lower brush fixing plate 6 such that the first brush 7 cleanly removes particles from the first pattern jig 2 while passing through the first pattern jig 2 according to leftward and rightward movement of the unit.

Here, a motor driving portion under the first brush unit 11 is coupled to an L-shaped guide 11b and a vertical guide 11a, and the vertical guide 11a is integrally coupled to the first upper brush fixing plate 5 and the first lower brush fixing plate 6, whereby the first brush unit 11 is formed as a single unit.

The second brush unit 12 is configured to have the same structure as the first brush unit 11. That is, the second brush unit 12 is formed as a single unit through integral coupling of guides.

When a predetermined period of time elapses in the state in which the first pattern jig 2 is cleaned, as described above, particles are removed from the used second pattern jig 3, and at the same time the cleaned first pattern jig 2 is replaced and used.

That is, at this time, as shown in FIG. 4, the rotating body 1 is rotated 90 degrees downward by driving of the motor 4, whereby the cleaned first pattern jig 2 is located at an infrared use position, and at the same time the used second pattern jig 3 is located below as the result of 90-degree rotation.

Therefore, the entire unit is moved leftward and rightward through the second brush unit 12 in the state in which the second pattern jig 3 located below as the result of 90-degree rotation, whereby particles are removed from the second pattern jig 3 through the second brush 10. Even at this time, interference is prevented due to the movement of the entire unit.

The second brush 10 is provided at a lower surface of the second upper brush fixing plate 8 and an upper surface of the second lower brush fixing plate 9 such that the second brush 10 cleanly removes particles from the second pattern jig 3 while passing through the second pattern jig 3 according to leftward and rightward movement of the unit.

Meanwhile, the pattern jig unit 13 of the present invention is configured such that the entire unit is moved in order to prevent interference, as shown in FIG. 2, which is a perspective view when viewed in the direction indicated by the arrow of FIG. 1.

That is, in the present invention, the first pattern jig 2 and the second pattern jig 3 are rotated by rotation of the rotating body 1 by driving of the motor 4 after leftward and rightward movement of the pattern jig unit 13, whereby automatic cleaning is performed. Subsequently, the positions of the first pattern jig 2 and the second pattern jig 3 are checked in the state in which the pattern jig unit 13 is moved leftward and rightward, and cleaning is performed.

As is apparent from the above description, the present invention has an effect in that, when positive electrode coating is performed on aluminum foil, negative electrode coating is performed on copper foil, and a non-coated portion, which is a part that is not coated, is cut, a pattern jig is periodically rotated upward and downward within 90 degrees in order to remove particles adhered to a support portion of the pattern jig due to high temperature, wherein the pattern jig is alternately rotated upward and downward, i.e., the pattern jig is rotated upward once and the pattern jig is rotated downward once, whereby, when the pattern jig is located above or when the pattern jig is located below, a brush is moved leftward and rightward to remove fumes and particles adhered to the pattern jig, and it is possible to continuously cut the non-coated portion using the pattern jig from which the particles have already been removed, i.e., the clean pattern jig.

The above is an exemplary description of technical ideas of the present invention, and various modifications, changes, and substitutions are possible by a person having ordinary skill in the art to which the present invention pertains without departing from the scope of the claims.

Accordingly, the embodiment and accompanying drawings disclosed herein are intended to illustrate, not to limit, the technical ideas of the present invention, and the scope of the technical ideas of the present invention is not limited by the embodiment and accompanying drawings.

The scope of protection of the present invention should be construed in accordance with the following claims, and all technical ideas within the range thereof shall be construed to be included in the scope of the present invention.

## Claims

1. An apparatus for automatically cleaning a pattern jig (2, 3) after laser notching, the apparatus comprising:
a first pattern jig (2) and a second pattern jig (3), on each of which a non-coated portion is cut by a laser, installed respectively at an upper surface and one side surface of a quadrangular rotating body (1);
a motor (4) configured to rotate the rotating body (1) within a range of 90 degrees;
a first upper brush fixing plate (5) and a first lower brush fixing plate (6) having a first brush (7) configured to clean the first pattern jig (2) when the first pattern jig (2) is located above;
a first brush unit (11) configured to move the first upper brush fixing plate (5) and the first lower brush fixing plate (6) leftward and rightward;
a second upper brush fixing plate (8) and a second lower brush fixing plate (9) having a second brush (10) configured to clean the second pattern jig (2) when the second pattern jig (2) is located below;
a second brush unit (12) configured to move the second upper brush fixing plate (8) and the second lower brush fixing plate (9) leftward and rightward; and
a pattern jig unit (13) configured to move the first pattern jig (2) and the second pattern jig (3) leftward and rightward, wherein
the first pattern jig (2) and the second pattern jig (3) are alternately rotated 90 degrees upward and downward every period of time such that the used pattern jig (2, 3) is automatically cleaned while the cleaned pattern jig (2, 3) is used.

2. The apparatus according to claim 1, wherein the pattern jig unit (13), the first brush unit (11), and the second brush unit (12) are moved as a whole in order to prevent interference.

3. The apparatus according to claim 1, wherein
the first pattern jig (2) and the second pattern jig (3) are rotated after leftward and rightward movement of the pattern jig unit (13), and
positions of the first pattern jig (2) and the second pattern jig (3) are checked in a state in which leftward and rightward movement of the pattern jig unit (13) is achieved, and cleaning is performed.

4. The apparatus according to claim 1, wherein a motor driving portion under each of the first brush unit (11) and the second brush unit (12) is coupled to an L-shaped guide (11b) and a vertical guide (11a), and the vertical guide (11a) is integrally coupled to the respective upper brush fixing plate (5, 8) and the respective lower brush fixing plate (6, 9), whereby each of the first brush unit (11) and the second brush unit (12) is formed as a single unit.

5. The apparatus according to claim 1, wherein the first pattern jig (2) and the second pattern jig (3) have the same structure, and are fixed to corner parts (1a) of the quadrangular rotating body (1) so as not to protrude therefrom.

## Patentansprüche

1. Vorrichtung zum automatischen Reinigen einer Musterschablone (2, 3) nach dem Laserkerben, wobei die Vorrichtung aufweist:
eine erste Musterschablone (2) und eine zweite Musterschablone (3), auf denen jeweils ein unbeschichteter Abschnitt mit einem Laser geschnitten wird, die jeweils an einer Oberseite und einer Seitenfläche eines viereckigen, drehenden Körpers (1) installiert ist;
ein Motor (4), der ausgebildet ist, um den drehenden Körper (1) innerhalb eines Bereichs von 90 Grad zu drehen;
eine erste obere Bürstenbefestigungsplatte (5) und eine erste untere Bürstenbefestigungsplatte (6) mit einer ersten Bürste (7), die ausgebildet ist, um die erste Musterschablone (2) zu reinigen, wenn sich die erste Musterschablone (2) darüber sich befindet;
eine erste Bürsteneinheit (11), die ausgebildet ist, um die erste obere Bürstenbefestigungsplatte (5) und die erste untere Bürstenbefestigungsplatte (6) nach links und nach rechts zu bewegen;
eine zweite obere Bürstenbefestigungsplatte (8) und eine zweite untere Bürstenbefestigungsplatte (9) mit einer zweiten Bürste (10), die ausgebildet ist, um die zweite Musterschablone (2) zu reinigen, wenn sich die zweite Musterschablone (2) sich darunter befindet;
eine zweite Bürsteneinheit (12), die ausgebildet ist, um die zweite obere Bürstenbefestigungsplatte (8) und die zweite untere Bürstenbefestigungsplatte (9) nach links und nach rechts zu bewegen; und
eine Musterschabloneneinheit (13), die ausgebildet ist, um die erste Musterschablone (2) und die zweite Musterschablone (3) nach links und nach rechts zu bewegen, wobei
die erste Musterschablone (2) und die zweite Musterschablone (3) abwechselnd jedes Zeitintervall um 90 Grad nach oben und nach unten gedreht werden, sodass die verwendete Musterschablone (2, 3) automatisch gereinigt wird, während die gereinigte Musterschablone (2, 3) verwendet wird.

2. Vorrichtung nach Anspruch 1, wobei
die Musterschabloneneinheit (13), die erste Bürsteneinheit (11) und die zweite Bürsteneinheit (12) als Ganzes bewegt werden, um eine Beeinträchtigung zu verhindern.

3. Vorrichtung nach Anspruch 1, wobei
die erste Musterschablone (2) und die zweite Musterschablone (3) nach der Bewegung der Musterschabloneneinheit (13) nach links und nach rechts gedreht werden, und
die Positionen der ersten Musterschablone (2) und der zweiten Musterschablone (3) in einem Zustand überprüft werden, in dem die Bewegung der Musterschabloneneinheit (13) nach links und nach rechts erreicht ist, und ein Reinigen durchgeführt wird.

4. Vorrichtung nach Anspruch 1, wobei
ein Motorantriebsabschnitt unter jeder der ersten Bürsteneinheit (11) und der zweiten Bürsteneinheit (12) mit einer L-förmigen Führung (11b) und einer vertikalen Führung (11a) gekoppelt ist, und die vertikale Führung (11a) integriert gekoppelt ist mit der jeweiligen oberen Bürstenbefestigungsplatte (5, 8) und der jeweiligen unteren Bürstenbefestigungsplatte (6, 9), wodurch jede der ersten Bürsteneinheit (11) und der zweiten Bürsteneinheit (12) als eine einzige Einheit ausgebildet ist.

5. Vorrichtung nach Anspruch 1, wobei
die erste Musterschablone (2) und die zweite Musterschablone (3) die gleiche Struktur aufweisen und an Eckteilen (1a) des viereckigen, drehenden Körpers (1) so befestigt sind, dass sie nicht aus diesem herausragen.

## Revendications

1. Appareil servant à nettoyer automatiquement un gabarit à motifs (2, 3) après un encochage au laser, l'appareil comprenant :
un premier gabarit à motifs (2) et un second gabarit à motifs (3), sur chacun desquels une partie non revêtue est découpée au laser, et installés respectivement au niveau d'une surface supérieure et d'une surface latérale d'un corps rotatif quadrangulaire (1) ;
un moteur (4) conçu pour faire tourner le corps rotatif (1) dans une plage de 90 degrés ;
une première plaque supérieure (5) de fixation de brosse et une première plaque inférieure (6) de fixation de brosse, comportant une première brosse (7) conçue pour nettoyer le premier gabarit à motifs (2) lorsque le premier gabarit à motifs (2) est situé au-dessus ;
un premier ensemble brosse (11) conçu pour déplacer la première plaque supérieure (5) de fixation de brosse et la première plaque inférieure (6) de fixation de brosse vers la gauche et vers la droite ;
une seconde plaque supérieure (8) de fixation de brosse et une seconde plaque inférieure (9) de fixation de brosse, comportant une seconde brosse (10) conçue pour nettoyer le second gabarit à motifs (3) lorsque le second gabarit à motifs (3) est situé au-dessous ;
un second ensemble brosse (12) conçu pour déplacer la seconde plaque supérieure (8) de fixation de brosse et la seconde plaque inférieure (9) de fixation de brosse vers la gauche et vers la droite ; et
un ensemble gabarit à motifs (13) conçu pour déplacer le premier gabarit à motifs (2) et le second gabarit à motifs (3) vers la gauche et vers la droite,
dans lequel
le premier gabarit à motifs (2) et le second gabarit à motifs (3) sont tournés en alternance 90 degrés vers le haut et vers le bas à chaque période, de sorte que le gabarit à motifs utilisé (2, 3) soit nettoyé automatiquement pendant que le gabarit à motifs nettoyé (2, 3) est utilisé.

2. L'appareil selon la revendication 1, dans lequel l'ensemble gabarit à motifs (13), le premier ensemble brosse (11) et le second ensemble brosse (12) sont déplacés dans leur ensemble afin d'empêcher une interférence.

3. L'appareil selon la revendication 1, dans lequel
le premier gabarit à motifs (2) et le second gabarit à motifs (3) sont tournés après le déplacement vers la gauche et vers la droite de l'ensemble gabarit à motifs (13), et
les positions du premier gabarit à motifs (2) et du second gabarit à motifs (3) sont vérifiées lorsque le déplacement vers la gauche et vers la droite de l'ensemble gabarit à motifs (13) est réalisé, et le nettoyage est effectué.

4. L'appareil selon la revendication 1, dans lequel une partie d'entraînement de moteur au-dessous de chaque ensemble, parmi le premier ensemble brosse (11) et le second ensemble brosse (12), est accouplée à un guide en L (11b) et à un guide vertical (11a), et le guide vertical (11a) est accouplé en une seule pièce à la plaque supérieure (5, 8) de fixation de brosse respective et à la plaque inférieure (6, 9) de fixation de brosse respective, moyennant quoi chaque ensemble, parmi le premier ensemble brosse (11) et le second ensemble brosse (12), est formé comme un ensemble unique.

5. L'appareil selon la revendication 1, dans lequel le premier gabarit à motifs (2) et le second gabarit à motifs (3) présentent la même structure, et sont fixés à des parties coin (1a) du corps rotatif quadrangulaire (1) de façon à ne pas faire saillie à partir de ce dernier.
